# EUROPEAN PATENT SPECIFICATION

(11) **EP 2 449 049 B1**
(45) Date of publication and mention of the grant of the patent: **21.03.2018**
(21) Application number: 10738022.2
(22) Date of filing: 25.06.2010
(51) Int. Cl.: C09J 7/00, B65H 75/00

(54) **IMPROVED ADHESIVE SHEETED ROLL**
VERBESSERTE WALZE MIT HAFTFOLIE
ROULEAU EN FEUILLES ADHESIVES AMELIORE

(30) Priority: 29.06.2009 GB 0911163
(43) Date of publication of application: 09.05.2012
(73) Proprietor: ITW Limited, Windsor Berkshire SL4 3BL (GB)
(72) Inventor: HAMILTON, Sheila, Kilmacolm PA13 4JW (GB)
(74) Representative: HGF Limited
(86) International application number: PCT/GB2010/051056
(87) International publication number: WO 2011/001166

(56) References cited:
- WO-A2-03/091138
- US-A- 5 349 714
- DATABASE WPI Week 200144 Thomson Scientific, London, GB; AN 2001-412822 XP002611225, & JP 2001 112703 A (HEISEI POLYMER KK) 24 April 2001 (2001-04-24)

## Description

### FIELD OF THE INVENTION

The present invention relates to an improved adhesive sheeted roll. More particularly, the present invention relates to an improved adhesive sheeted roll and individual embossed sheets making up the sheeted roll which contain no silicones.

### BACKGROUND OF THE INVENTION

In contact cleaning, adhesive rolls have a release coating on a non-adhesive side. This prevents the adhesive from permanently sticking to the non-adhesive side when wound up in a roll. The adhesive must however have some adhesion to the release coat to maintain the integrity of the roll.

Contact cleaning processes are known where a wound sheeted roll is used to remove impurities from a surface. In this regard we refer to WO 03/091138 which is incorporated herein by reference. Previous contact cleaning processes have used a thin coating of silicone to form a release coating. However, silicones have been found to present several disadvantages. For example, silicones are now known to be environmentally unfriendly and silicones from shampoos and conditioners have been found to form a sludge in the oceans which kills living organisms. Silicones are also chemically inert and are not easily broken down. More importantly, products containing silicones cannot be recycled and are not biodegradable.

The silicone coating during a contact cleaning process can also rub off if it is not properly cured and may therefore be deposited on the surface of parts being cleaned. This can also cause subsequent processing issues. Moreover, silicone on a surface will prevent inks or coatings sticking to the surface causing the product to be scrapped.

Many customers will also not allow any product containing silicone to be used in their plants.

It is an object of at least one aspect of the present invention to obviate or mitigate at least one or more of the aforementioned problems.

It is a further object of at least one aspect of the present invention to provide an improved adhesive sheeted roll.

It is a yet further object of at least one aspect of the present invention to provide an improved adhesive sheeted roll containing no silicones suitable for use in contact cleaning.

### SUMMARY OF THE INVENTION

According to a first aspect of the present invention there is provided a sheeted roll for use in contact cleaning comprising:
a roll core;
at least one sheet of adhesive material removably attached to the roll core;
wherein the adhesive sheet has two sides, a first side comprising adhesive and a second side comprising an embossed surface with the proviso that the adhesive sheet contains no silicones and wherein the at least one adhesive sheet is biodegradable and recyclable and so the complete adhesive roll is environmentally friendly.

The present invention therefore resides in the provision of a sheeted roll suitable for use in contact cleaning which contains no silicones. The individual sheets and adhesive material are therefore free of silicones. The adhesive sheets may also comprise anti-static additives and/or bacteriocides.

The sheets of adhesive material may therefore comprise an embossed surface facing inwardly on the individual adhesive sheets that do not have any silicones which is a particular advantage over prior art adhesive sheets. The sheeted roll as a whole therefore has no silicones.

The at least one sheet of adhesive material may be wound around the circumference of the roll core. The sheets of adhesive material may be greater in length than the circumferential length of the roll core. Each end of the sheets of adhesive material may be abutted to an end of another sheet. The other end of each sheet may be abutted to another end of said sheet.

Typically, there may at least two or more or a plurality of sheets of adhesive material wound, for example, around each other. On top of a first sheet of adhesive material there may be subsequent sheets of adhesive material removable attached thereon. The subsequent sheets may therefore be wound onto and removably attached on previous sheets of material on, for example, the roll core. The said at least one sheet and subsequent sheets of adhesive material may therefore provide an adhesive surface holding the sheets to one another on the roll core.

In particular embodiments the sheet of adhesive material may be manufactured from a thermoplastic polymer in the form of a thin film such as a polypropylene film product which has no silicone release coating. Preferably, the polypropylene film may be made from polypropylene with a molecular weight of about 150 - 270 kg mol⁻¹.

The thermoplastic polymer film (e.g. polypropylene) may have a thickness of about 30 - 200 microns.

The thermoplastic polymer sheets may have a size of about 20cm X 10cm.

The sheet of adhesive material may also comprise an embossed surface to minimise the contact area of the adhesive on the film and so reduce the adhesion to another sheet to a level where the adhesive roll maintains its integrity but the adhesive sheets can be easily unwound and replaced/refreshed when necessary. The embossed surface facilitates removal of each sheet.

The embossing may be in the form of a 3-dimensional regular or irregular pattern formed on one side of the adhesive sheets. The embossing may form an imprint with a depth of about 0.2 - 5 microns and preferably about 1 - 2 microns.

The embossing on the film may reduce the contact area of the adhesive on the film by about less than 50%, 60%, 70%, 80% or 90%.

The embossing may be defined as an 'orange peel' emboss which provides a random surface. The embossing may be achieved using any typical process and may therefore be achieved using an embossing cylinder which has an embossing pattern (e.g. the 'orange peel' pattern) etched on the outer surface of the cylinder. The embossing cylinder may be rolled over the film which impresses the embossing pattern into the film. The embossing cylinder may be either hot or cold.

The sheeted roll may therefore have layers of adhesive sheets with alternating adhesive and embossed surfaces between the sheets.

Typically, the thermoplastic polymer and adhesive are biodegradable and recyclable and so the complete adhesive roll may be environmentally friendly.

Typically, the adhesive used on one side of the sheets may be any suitable adhesive which permits removal of impurities from a contaminated surface. In particular embodiments, the adhesive material may be dispensed.

The adhesive may be a pressure sensitive adhesive.

In a further embodiment, anti-static additives may be added to the film and/or the adhesive. Currently, the adhesive roll runs in contact with an elastomer roller often at high speeds. The rolling friction generates a very high static charge and the alternating layers of paper and adhesive act like a capacitor holding a charge. When an operator goes to remove one sheet from a roll to refresh it, they can in some circumstances receive a shock from the stored electricity. It has been found that the addition of anti-static agents may mitigate this risk.

The anti-static additives may, for example, be any suitable additives with anti-static properties such as ionic salts (e.g. metal salts) which may be used in a concentration of about 0.1 - 0.5 wt.%. Typical anti-static additives may, for example, be Larostat (Trade Mark) made by BASF and Entira (Trade Mark) made by Du Pont.

In further embodiments, bacteriocides may be added to the adhesive and/or impregnated in the adhesive sheets to minimise the risk of bacterial growth on the adhesive roll. The adhesive roll may capture and hold bacteria and viruses from the air (e.g. swine flu) and allow the bacteria to grow and spread infection amongst the operators who remove the individual sheets to refresh the roll. Bacteriocides may be present in a concentration of about 0.1 - 0.5 wt.% and may, for example, be Vinyzene (Trade Mark) made by Rohm and Haas.

According to a second aspect of the present invention there is provided a method of removing debris and/or contaminants from a contaminated surface using a sheeted roll, said method comprising:
providing a roll core;
providing at least one sheet of adhesive material removably attached to the roll core;
wherein the adhesive sheet has two sides, a first side comprising adhesive and a second side comprising an embossed surface with the proviso that the adhesive sheet contains no silicones and wherein the at least one adhesive sheet is biodegradable and recyclable and so the complete adhesive roll is environmentally friendly. Typically, the adhesive sheet may be as described in the first aspect.

According to a third aspect of the present invention there is provided a use of a sheeted roll according to the first aspect in cleaning a contaminated surface.

According to a fourth aspect of the present invention there is provided a sheet of adhesive material which is capable of being removably attached to a roll core and wherein the adhesive sheet has two sides, a first side comprising adhesive and a second side comprising an embossed surface with the proviso that the adhesive sheet contains no silicones and wherein the at least one adhesive sheet is biodegradable and recyclable and so the complete adhesive roll is environmentally friendly. The adhesive sheet may be as described in the first aspect.

According to a fith aspect of the present invention there is provided an apparatus for cleaning a workpiece, said apparatus comprising:
at least one cleaning roll having a cleaning surface;
the cleaning roll being rotatably mountable adjacent to a workpiece;
the sheeted roll comprising at least one sheet of adhesive material removably attached thereon and being rotatably mounted adjacent the cleaning roll relative to the workpiece; and
wherein the adhesive sheet has two sides, a first side comprising adhesive and a second side comprising an embossed surface with the proviso that the adhesive sheet contains no silicones and wherein the at least one adhesive sheet is biodegradable and recyclable and so the complete adhesive roll is environmentally friendly.
In particular embodiments, the apparatus may be used to form electronic components such as plastic electronics, photovoltaics and flat panel displays.

### BRIEF DESCRIPTION OF THE DRAWINGS

Embodiments of the present invention will now be described, by way of example only, with reference to the accompanying drawings in which:
Figure 1 is a view of apparatus for cleaning a workpiece according to an embodiment of the present invention; and
Figure 2 is a view from one end of an adhesive roll according to an embodiment of the present invention illustrating how sheets of material are superimposed onto a roll core.

### BRIEF DESCRIPTION

Generally speaking, the present invention resides in the provision of an adhesive sheeted roll and layers of adhesive sheets suitable or use in contact cleaning which contain no silicones. The adhesive sheet may also comprise anti-static additives and/or bacteriocides.

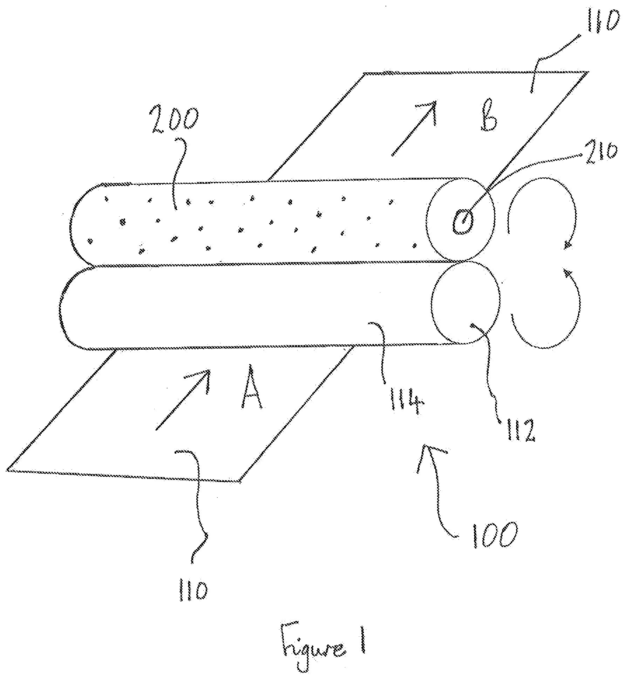

Figure 1 represents apparatus according to the present invention, generally designated 100. The apparatus 100 comprises at least one cleaning roll 112 having a cleaning surface 114. The cleaning roll 112 therefore functions as a contact cleaning roller. There is also an adhesive sheeted roll generally designated 200. The sheeted adhesive roll 200 comprises a roll core 210 which has multiple layers of adhesive sheeting. The cleaning roller 112 is typically elastomer coated or made of other forms of rubber or like material to facilitate the removal of impurities from the workpiece 110.

The cleaning roller 112 is rotatably mountable adjacent to the workpiece 110 to be cleaned in such a way that allows the cleaning surface 114 to be in contact at a point on a surface of the workpiece 110. Hence, as the workpiece 110 is conveyed, the cleaning roller 112 rotates and the cleaning surface 114 of the cleaning roller 112 removes any impurities/deposits located on the workpiece 110.

As shown in Figure 1, the contact cleaning roller 112 counter-rotates against the adhesive sheeted roller 200 which removes contaminated particles formed on the contact cleaning roller 112. The region identified by reference 'A' in the substrate 110 is therefore uncleaned and the region identified by reference 'B' is cleaned and may then be used in the improved manufacture of, for example, electronic components such as plastic electronics, photovoltaics and flat panel displays.

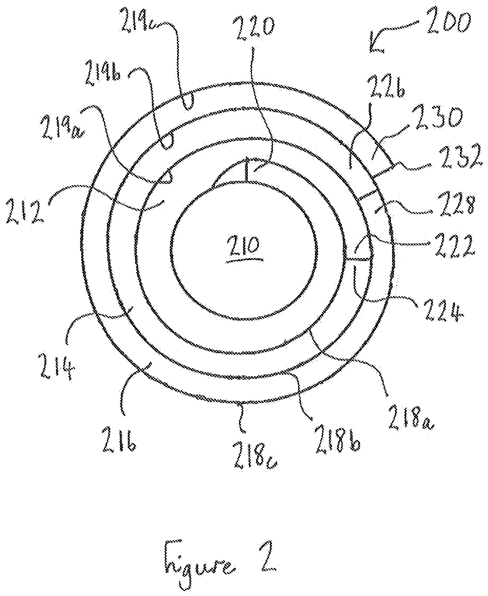

Figure 2 is a detailed end view of the sheeted roller 200. The sheeted roller 200 comprises a roll core 210 with three individual adhesive sheets 212, 214, 216 (although any number of sheets may be used) removably attached around the circumference of the roll core 210 superimposed onto one another.

The roll core 210 has an attachment means which may, for example, be an adhesive coating to allow the first individual adhesive sheet 212 to be removably attachable around the circumference of the roll core 210.

The individual adhesive sheets 212, 214, 216 have an adhesive surface 218a, 218b, 218c facing outwardly, and have a non-adhesive surface 219a, 219b, 219c facing inwardly. (Alternatively, the individual sheets can be rolled such that the adhesive surfaces are facing inwardly and the non-adhesive surfaces are facing outwardly).

The sheeted roller 200 is formed by attaching a first end 220 of the first sheet 212 onto the roll core 210 and wrapping the first sheet 212 around the circumference of the roll core 210.

The other end 222 of the first sheet 212 will overrun end 220 by virtue of the first sheet 212 being greater in length than the circumference of the roll core 210.

The end 222 is removably attached on end 220 by the adhesive surface 218a of the first sheet 212.

A second sheet 214 is then wrapped around the outer circumference of the first sheet 212 with end 224 of the second sheet 214 being abutted to end 222 of the first sheet 212. The term abutted is to be understood to include being adjacent to; there may be a gap between successive sheets.

The adhesive surface 218a of the first sheet 212 will securely hold in place the second sheet 214.

A third sheet 216 is then wrapped around the outer circumference of the second sheet 214 with end 228 of the third sheet 216 being abutted to end 226 of the second sheet 214.

The adhesive surface 218b of the second sheet 214 will securely hold in place the third sheet 216.

Similarly, further individual adhesive sheets (not shown) are abutted to end 230 of the third sheet 216 and so on until the roll core 210 is "full".

It will be realised that because the sheets 212, 214, 216 are all of the same length, the overrun or circumferential offset of the respective ends 222, 226, 230 and so on, will decrease as the roll core 210 becomes "full". The length of each sheet can however be adjusted as desired or required.

The offset of the abutment of the ends of the sheets disperses the load on the roll core 210 making the roll core 210 more stable when rotating.

In use, the roll core 210 is positioned such that the outermost sheet is positioned in contact at a point on a surface to be cleaned.

As both the roll core 210 and the cleaning roller 212 rotate, impurities located on the surface 110 to be cleaned will be transferred to the adhesive surface 218c of the outer sheet 216.

When the adhesive surface 218c of the outer sheet 216 becomes contaminated, replacement is simply achieved by peeling the contaminated sheet 216 away by virtue of lip 232, thus leaving behind a clean sheet 214 to be applied to a cleaning surface 114 of the cleaning roll 112, until that too needs replaced, and so on.

The non-adhesive surfaces 219a, 219b, 219c facing inwardly on the individual adhesive sheets 212, 214, 216 are embossed and do not have any silicones which is a particular advantage over prior art adhesive sheets. The sheeted roll 200 as a whole therefore has no silicones. The adhesive sheets 212, 214, 216 therefore have an embossed surface on the inwardly facing surface 219a, 219b, 219c. The embossing facilitates removal of the sheets 212, 214, 216 when they need to be refreshed/replaced.

In one embodiment, the adhesive sheets 212, 214, 216 are manufactured from a thermoplastic polymer such as a polypropylene film product with a molecular weight of about 150 - 270 kg mol⁻¹. The polypropylene film has a thickness of about 30 - 200 microns

The thermoplastic polymer such as polypropylene base film and adhesives used are biodegradable and recyclable and so the complete adhesive roller 200 is environmentally friendly.

The sheets of adhesive material made from thermoplastic polymer (e.g. polypropylene) have an embossed surface to minimise the contact area of the adhesive on the film and so reduce the adhesion to a level where the adhesive roller 200 maintains its integrity but the adhesive sheets 212, 214, 216 can be unwound.

The embossing may be defined as an 'orange peel' emboss which provides a random surface. The embossing is achieved using an embossing cylinder which has the embossing pattern (e.g. the 'orange peel' pattern) etched on the outer surface of the cylinder. The embossing cylinder is rolled over the film which impresses the embossing pattern into the film. The embossing cylinder is either hot or cold.

The embossing is in the form of a 3-dimensional regular or irregular pattern formed on the inwardly facing surfaces 219a, 219b, 219c of the adhesive sheets 212, 214, 216. The embossing forms an imprint with a depth of about 0.2 - 5 microns and preferably about 1 - 2 microns.

The embossing on the adhesive sheet reduces the contact area of the adhesive sheets by about less than about 50%, 60%, 70%, 80% or 90%.

Anti-static additives may also be added to the film forming the adhesive sheets and/or the adhesive itself. Currently, the adhesive roller runs in contact with an elastomer roller often at high speeds. The rolling friction generates a very high static charge and the alternating layers of paper and adhesive act like a capacitor holding a charge. When an operator goes to remove one sheet from a roller to refresh it, they can in some circumstances receive a shock from the stored electricity. It has been found that the addition of anti-static agents may mitigate this risk.

The anti-static additives may, for example, be any suitable additives with anti-static properties such as ionic salts. The anti-static additives may be present in a concentration of about 0.1 - 0.5 wt.%. Suitable anti-static additives may be, for example, Larostat (Trade Mark) made by BASF and Entira (Trade Mark) made by Du Pont.

Bacteriocides may also be added to the adhesive and/or impregnated into the sheets to minimise the risk of bacterial growth on the adhesive roller. The adhesive roller has the ability to capture and hold bacteria and viruses from the air (e.g. swine flu) and allow the bacteria to grow and spread infection among the operators who remove the individual sheets to refresh the roll. A particular example of a bacteriocide is Vinyzene (Trade Mark) made by Rohm and Haas. The bacteriocides are used in a concentration of about 0.1 - 0.5 wt.%.

Whilst specific embodiments of the present invention have been described above, it will be appreciated that departures from the described embodiments may still fall within the scope of the present invention. For example, any suitable type of anti-static additives and bacteriocides may be used. Moreover, any suitable type of embossing may be used.

## Claims

1. A sheeted roll for use in contact cleaning comprising:
a roll core;
at least one sheet of adhesive material removably attached thereon;
wherein the adhesive sheet has two sides, a first side comprising adhesive and a second side comprising an embossed surface with the proviso that the adhesive sheet contains no silicones and wherein the at least one adhesive sheet is biodegradable and recyclable and so the complete adhesive roll is environmentally friendly.

2. A sheeted roll according to claim 1, wherein the sheeted roll comprises at least two or more or a plurality of sheets of adhesive material wound around each other and the roll core.

3. A sheeted roll according to any of claims 1 or 2, wherein the sheets of adhesive material comprise an embossed surface facing inwardly on the individual adhesive sheets wherein the embossed surface contains no silicones.

4. A sheeted roll according to any preceding claim, wherein the sheets of adhesive material are removably attached around the roll core.

5. A sheeted roll according to any preceding claim, wherein the sheets of adhesive material are formed from a thermoplastic polymer in the form of a flexible film.

6. A sheeted roll according to claim 5, wherein the thermoplastic polymer is a polypropylene with a molecular weight of 150 - 270 kg mol⁻¹.

7. A sheeted roll according to any preceding claim, wherein at least one or all of the sheets of adhesive material comprise an embossed surface to minimise the contact area of the adhesive on the sheets.

8. A sheeted roll according to claim 7, wherein the embossing is in the form of a 3-dimensional regular or irregular pattern formed in the adhesive sheets.

9. A sheeted roll according to any of claims 7 or 8, wherein the embossing reduces the contact area of the adhesive on the film by less than 50%, 60%, 70%, 80% or 90%.

10. A sheeted roll according to any preceding claim, wherein the sheets of adhesive material and/or adhesive and/or release coating comprise anti-static additives.

11. A sheeted roll according to claim 10, wherein the anti-static additives are ionic salts used in a concentration of 0.1 - 0.5 wt.%.

12. A sheeted roll according to any preceding claim, wherein the sheets of adhesive material and/or adhesive and/or release coating comprise bacteriocides.

13. A sheeted roll according to claim 12, wherein the bacteriocides are present in a concentration of 0.1 - 0.5 wt.%.

14. A method of removing debris and/or contaminants from a contaminated surface using a sheeted roll, said method comprising:
providing a roll core;
providing at least one sheet of adhesive material removably attached to the core;
wherein the adhesive sheet has two sides, a first side comprising adhesive and a second side comprising an embossed surface with the proviso that the adhesive sheet contains no silicones and wherein the at least one adhesive sheet is biodegradable and recyclable and so the complete adhesive roll is environmentally friendly.

15. Use of a sheeted roll according to any of claims 1 to 13 in cleaning a contaminated surface.

16. A sheet of adhesive material which is capable of being removably attached to a roll core and wherein the adhesive sheet has two sides, a first side comprising adhesive and a second side comprising an embossed surface with the proviso that the adhesive sheet contains no silicones and the adhesive sheet is biodegradable and recyclable and so the complete adhesive sheet is environmentally friendly.

17. Apparatus for cleaning a workpiece, said apparatus comprising:
at least one cleaning roll having a cleaning surface;
the cleaning roll being rotatably mountable adjacent to a workpiece;
the sheeted roll comprising at least one sheet of adhesive material removably attached thereon and being rotatably mounted adjacent the cleaning roll relative to the workpiece; and
wherein the at least one adhesive sheet has two sides, a first side comprising adhesive and a second side comprising an embossed surface with the proviso that the adhesive sheet contains no silicones and wherein the at least one adhesive sheet is biodegradable and recyclable and so the complete adhesive roll is environmentally friendly.

18. Apparatus according to claim 17, wherein the workpiece is used to form electronic components including that of plastic electronics, photovoltaics and flat panel displays.

## Patentansprüche

1. Folienwalze für die Verwendung bei der Kontaktreinigung, umfassend:
einen Walzenkern;
mindestens eine Folie aus einem Haftmaterial, das entfernbar darauf angebracht ist;
wobei die Haftfolie zwei Seiten aufweist, eine erste Seite, die Klebstoff umfasst und eine zweite Seite, die eine geprägte Oberfläche umfasst, mit der Maßgabe, dass die Haftfolie keine Silikone enthält und wobei die mindestens eine Haftfolie biologisch abbaubar und wiederverwertbar ist und so die gesamte Haftfolienwalze umweltfreundlich ist.

2. Folienwalze nach Anspruch 1, wobei die Folienwalze mindestens zwei oder mehr oder eine Vielzahl von Schichten aus Haftmaterial umfasst, die jeweils umeinander und den Walzenkern gewickelt sind.

3. Folienwalze nach einem der Ansprüche 1 oder 2, wobei die Folien aus Haftmaterial eine geprägte Oberfläche umfassen, die nach innen zu den einzelnen Haftfolien weist, wobei die geprägte Oberfläche kein Silikon enthält.

4. Folienwalze nach einem der vorhergehenden Ansprüche, wobei die Folien aus Haftmaterial entfernbar um den Walzenkern herum angebracht sind.

5. Folienwalze nach einem der vorhergehenden Ansprüche, wobei die Folien aus Haftmaterial aus einem thermoplastischen Polymer in Form eines flexiblen Films gebildet sind.

6. Folienwalze nach Anspruch 5, wobei das thermoplastische Polymer ein Polypropylen mit einem Molekulargewicht von etwa 150 bis 270 kg mol⁻¹ ist.

7. Folienwalze nach einem der vorhergehenden Ansprüche, wobei die mindestens eine oder alle Folien aus Haftmaterial eine geprägte Oberfläche umfassen, um die Kontaktfläche des Klebstoffs auf den Folien zu minimieren.

8. Folienwalze nach Anspruch 7, wobei die Prägung in Form eines dreidimensionalen regelmäßigen oder unregelmäßigen Musters vorliegt, das in den Haftfolien ausgebildet ist.

9. Folienwalze nach einem der Ansprüche 7 oder 8, wobei die Prägung die Kontaktfläche des Klebstoffs auf dem Film um weniger als 50%, 60%, 70%, 80% oder 90% reduziert.

10. Folienwalze nach einem der vorhergehenden Ansprüche, wobei die Folien aus Haftmaterial und/oder der Klebstoff und/oder die Ablösebeschichtung antistatische Zusatzstoffe umfassen.

11. Folienwalze nach Anspruch 10, wobei die antistatischen Zusatzstoffe ionische Salze sind, die in einer Konzentration von 0,1 bis 0,5 Gew.-% verwendet werden.

12. Folienwalze nach einem der vorhergehenden Ansprüche, wobei die Folien aus Haftmaterial und/oder der Klebstoff und/oder die Ablösebeschichtung Bakterizide umfassen.

13. Folienwalze nach Anspruch 12, wobei die Bakterizide in einer Konzentration von 0,1 bis 0,5 Gew.-% vorliegen.

14. Verfahren zum Entfernen von Fremdkörpern und/oder Verunreinigungen von einer kontaminierten Oberfläche unter Verwendung einer Folienwalze, wobei das Verfahren umfasst:
Bereitstellen eines Walzenkerns;
Bereitstellen mindestens einer Folie aus einem Haftmaterial, das entfernbar an dem Kern angebracht ist;
wobei die Haftfolie zwei Seiten aufweist, eine erste Seite, die Klebstoff umfasst und eine zweite Seite, die eine geprägte Oberfläche umfasst, mit der Maßgabe, dass die Haftfolie keine Silikone enthält und wobei die mindestens eine Haftfolie biologisch abbaubar und wiederverwertbar ist und so die gesamte Haftfolienwalze umweltfreundlich ist.

15. Verwendung einer Folienwalze nach einem der Ansprüche 1 bis 13 zur Reinigung einer kontaminierten Oberfläche.

16. Folie aus Haftmaterial, das entfernbar an einem Walzenkern angebracht werden kann, wobei die Haftfolie zwei Seiten aufweist, eine erste Seite, die Klebstoff umfasst und eine zweite Seite, die eine geprägte Oberfläche umfasst, mit der Maßgabe, dass die Haftfolie keine Silikone enthält und die Haftfolie biologisch abbaubar und wiederverwertbar ist und so die gesamte Haftfolie umweltfreundlich ist.

17. Vorrichtung zum Reinigen eines Werkstücks, wobei die Vorrichtung umfasst:
mindestens eine Reinigungswalze, die eine Reinigungsoberfläche aufweist;
wobei die Reinigungswalze drehbar montierbar benachbart eines Werkstücks montiert ist;
wobei die Folienwalze mindestens eine Folie aus einem Haftmaterial umfasst, das entfernbar darauf angebracht ist und drehbar benachbart der Reinigungswalze in Bezug auf das Werkstück montiert ist; und
wobei die mindestens eine Haftfolie zwei Seiten aufweist, eine erste Seite, die Klebstoff umfasst und eine zweite Seite, die eine geprägte Oberfläche umfasst, mit der Maßgabe, dass die Haftfolie keine Silikone enthält und wobei die mindestens eine Haftfolie biologisch abbaubar und wiederverwertbar ist und so die gesamte Haftfolienwalze umweltfreundlich ist.

18. Vorrichtung nach Anspruch 17, wobei das Werkstück verwendet wird, um elektronische Komponenten zu bilden, einschließlich Kunststoffelektronik, Photovoltaik und Flachbildschirme.

## Revendications

1. Rouleau en feuilles destiné à une utilisation dans le nettoyage par contact, comprenant :
un noyau de rouleau ;
au moins une feuille de matériau adhésif fixée de manière amovible sur ledit noyau de rouleau ;
dans lequel la feuille adhésive comporte deux côtés, un premier côté comprenant un adhésif et un deuxième côté comprenant une surface gaufrée sous réserve que la feuille adhésive ne contienne pas de silicones et dans lequel ladite au moins une feuille adhésive est biodégradable et recyclable de telle sorte que l'ensemble du rouleau adhésif soit respectueux de l'environnement.

2. Rouleau en feuilles selon la revendication 1, le rouleau en feuilles comprenant au moins deux ou plus ou une pluralité de feuilles de matériau adhésif enroulées les unes autour des autres et autour du noyau de rouleau.

3. Rouleau en feuilles selon l'une quelconque des revendications 1 ou 2, dans lequel les feuilles de matériau adhésif comprennent une surface gaufrée orientée vers l'intérieur sur les feuilles adhésives individuelles, la surface gaufrée ne contenant pas de silicones.

4. Rouleau en feuilles selon l'une quelconque des revendications précédentes, dans lequel les feuilles de matériau adhésif sont fixées de manière amovible autour du noyau de rouleau.

5. Rouleau en feuilles selon l'une quelconque des revendications précédentes, dans lequel les feuilles de matériau adhésif sont formées à partir d'un polymère thermoplastique sous la forme d'un film flexible.

6. Rouleau en feuilles selon la revendication 5, dans lequel le polymère thermoplastique est un polypropylène ayant une masse moléculaire de 150 à 270 kg mol⁻¹.

7. Rouleau en feuilles selon l'une quelconque des revendications précédentes, dans lequel au moins l'une des feuilles ou toutes les feuilles de matériau adhésif comprennent une surface gaufrée pour minimiser la zone de contact de l'adhésif sur les feuilles.

8. Rouleau en feuilles selon la revendication 7, dans lequel le gaufrage se présente sous la forme d'un motif tridimensionnel régulier ou irrégulier formé dans les feuilles adhésives.

9. Rouleau en feuilles selon l'une quelconque des revendications 7 ou 8, dans lequel le gaufrage réduit la surface de contact de l'adhésif sur le film de moins de 50 %, 60 %, 70 %, 80 % ou 90 %.

10. Rouleau en feuilles selon l'une quelconque des revendications précédentes, dans lequel les feuilles de matériau adhésif et/ou le revêtement adhésif et/ou anti-adhésif comprennent des additifs antistatiques.

11. Rouleau en feuilles selon la revendication 10, dans lequel les additifs antistatiques sont des sels ioniques utilisés dans une concentration de 0,1 à 0,5 % en poids.

12. Rouleau en feuilles selon l'une quelconque des revendications précédentes, dans lequel les feuilles de matériau adhésif et/ou le revêtement adhésif et/ou anti-adhésif comprennent des bactéricides.

13. Rouleau en feuilles selon la revendication 12, dans lequel les bactéricides sont présents dans une concentration de 0,1 à 0,5 % en poids.

14. Procédé d'enlèvement de débris et/ou de contaminants d'une surface contaminée à l'aide d'un rouleau en feuilles, ledit procédé comprenant :
la fourniture d'un noyau de rouleau ;
la fourniture d'au moins une feuille de matériau adhésif fixée de manière amovible au noyau ;
dans lequel la feuille adhésive comporte deux côtés, un premier côté comprenant un adhésif et un deuxième côté comprenant une surface gaufrée sous réserve que la feuille adhésive ne contienne pas de silicones et dans lequel ladite au moins une feuille adhésive est biodégradable et recyclable de telle sorte que l'ensemble du rouleau adhésif soit respectueux de l'environnement.

15. Utilisation d'un rouleau en feuilles selon l'une quelconque des revendications 1 à 13 dans le nettoyage d'une surface contaminée.

16. Feuille de matériau adhésif qui est capable d'être fixée de manière amovible à un noyau de rouleau et la feuille adhésive comportant deux côtés, un premier côté comprenant un adhésif et un deuxième côté comprenant une surface gaufrée sous réserve que la feuille adhésive ne contienne pas de silicones et que la feuille adhésive soit biodégradable et recyclable de telle sorte que toute la feuille adhésive soit respectueuse de l'environnement.

17. Appareil conçu pour le nettoyage d'une pièce, ledit appareil comprenant :
au moins un rouleau de nettoyage comportant une surface de nettoyage ;
le rouleau de nettoyage pouvant être monté à rotation de façon adjacente à une pièce ;
le rouleau à feuilles comprenant au moins une feuille de matériau adhésif fixée de manière amovible sur ledit rouleau et étant monté à rotation de façon adjacente au rouleau de nettoyage relativement à la pièce ; et
dans lequel ladite au moins une feuille adhésive comporte deux côtés, un premier côté comprenant un adhésif et un deuxième côté comprenant une surface gaufrée sous réserve que la feuille adhésive ne contienne pas de silicones et dans lequel ladite au moins une feuille adhésive est biodégradable et recyclable de telle sorte que l'ensemble du rouleau adhésif soit respectueux de l'environnement.

18. Appareil selon la revendication 17, dans lequel la pièce est utilisée pour former des composants électroniques, y compris des composants de dispositifs électroniques en plastique, de photovoltaïques et d'écrans plats.
